# FASCICULE DE BREVET EUROPEEN

(11) **EP 3 561 360 B1**
(45) Date de publication et mention de la délivrance du brevet: **06.01.2021**
(21) Numéro de dépôt: 19169103.9
(22) Date de dépôt: 12.04.2019
(51) Int. Cl.: F16L 23/08

(54) **SYSTEME DE SERRAGE A PATTES RABATTABLES POUR LE RACCORDEMENT DE TUBES**
SPANNSYSTEM MIT HERUNTERKLAPPBAREN SPANNBACKEN FÜR DEN ANSCHLUSS VON ROHREN
TIGHTENING SYSTEM WITH FOLDING TABS FOR CONNECTING TUBES

(30) Priorité: 26.04.2018 FR 1853686
(43) Date de publication de la demande: 30.10.2019
(73) Titulaire: Caillau, 92130 Issy-les-Moulineaux (FR)
(72) Inventeur: DRIVON, Stéphane, 41200 Romorantin (FR); RIGOLLET, Nicolas, 41200 Romorantin (FR)
(74) Mandataire: Cabinet Beau de Loménie

(56) Documents cités:
- EP-A1- 1 451 498
- EP-A1- 2 598 785
- FR-A1- 2 906 864

## Description

Le présent exposé concerne un système de serrage pour le raccordement d'un premier et un deuxième tube dont les extrémités en regard présentent des surfaces de serrage en saillie par rapport à la surface extérieure cylindrique desdits tubes.

Un système de serrage de ce type est connu, par exemple par les brevets européens EP 1 451 498 et EP 2 598 785.

Dans un tel système, le collier comprend une ceinture apte à être serrée autour des surfaces de serrage des tubes. La ceinture présente des flancs entre lesquels est délimité un renfoncement interne dans lequel sont disposées les surfaces de serrage des tubes pour réaliser le serrage. Les tubes sont ainsi retenus serrés l'un par rapport à l'autre. Comme indiqué dans les brevets précités, il peut être utile de pré-monter le système de serrage sur l'extrémité d'au moins l'un des tubes avant d'opérer le serrage.

Afin de permettre un pré-montage sur les deux tubes, EP 2 598 785 préconise que le système de serrage comprenne une rondelle, retenue par rapport au collier par des pattes de fixation, et comprenant des premières et des deuxièmes pattes de pré-montage aptes à respectivement coopérer avec le premier et le deuxième tube pour retenir la rondelle, et donc l'ensemble du système de serrage, par rapport aux surfaces de serrage respectives des tubes avant le serrage. Ces pattes de pré-montage comprennent en l'espèce des pattes courtes s'étendant en retour au-dessus de la forme annulaire tronconique de la rondelle pour coopérer avec la surface de serrage du tube dont la surface de serrage est disposée entre la ceinture et la rondelle. Ces pattes de pré-montage comportent également des pattes longues, qui s'étendent à partir du sommet de la rondelle dans le sens opposé à la rondelle pour venir coopérer avec la surface de serrage de l'autre tube.

Dans EP 2 598 785, les pattes de ces deux catégories sont déformables élastiquement. Ce dispositif donne globalement satisfaction, mais, pour certaines applications, il importe de fiabiliser la retenue des pattes par rapport aux surfaces de serrage, en particulier en ce qui concerne les pattes longues. En effet, s'agissant en particulier de pattes longues, il peut être difficile d'assurer la bonne plage de déformation élastique pour certains diamètres de serrage, en particulier des grands diamètres de l'ordre de 5cm ou davantage. D'un côté, il convient de faire en sorte que le module d'élasticité de ces pattes soit suffisamment élevé pour qu'elles présentent l'élasticité souhaitable pour, après avoir été déformées lors de l'engagement du tube dans le système de serrage, reprendre élastiquement une position assurant la retenue pré-montée de ce tube. Elles doivent alors présenter la nervosité élastique nécessaire pour ne pas se déformer trop aisément si une traction est exercée sur le tube dans le sens de son désengagement du système de serrage. Cependant, cette retenue élastique est utile seulement à l'état pré-monté, avant le serrage. A l'état serré, il est au contraire souhaitable que les pattes soient déformées pour être plaquées à l'intérieur de la ceinture du collier, sans nuire à la qualité du serrage. Cependant, si le module élastique des pattes est élevé, cette dernière propriété peut être difficile à réaliser dans certains cas, en particulier pour les colliers de grands diamètres. De plus, si le module élastique est trop élevé, l'effort de poussée d'engagement nécessaire au clipsage des pattes sur la surface de serrage du tube peut être élevé, et difficilement réalisable dans un contexte de montage final.

Ainsi, même si le système de EP 2 598 785 donne satisfaction pour un grand nombre d'applications, il est souhaitable de proposer une autre solution permettant un pré-montage du système de serrage à l'extrémité du premier tube sensiblement exempte des inconvénients précités, en particulier pour les colliers de grands diamètres.

EP 1 451 498 propose un système permettant un pré-montage par rapport à un tube, à l'aide de pattes de pré-montage également portées par la ceinture via une rondelle elle-même portée par la ceinture. Les mêmes problèmes que ceux évoqués ci-dessus peuvent se poser pour un pré-montage par rapport à un seul tube.

On connaît en outre d'autres systèmes de serrage comprenant un collier et une rondelle portée par le collier, la rondelle présentant des pattes internes, aptes à s'agripper à l'intérieur de l'un des tubes, pour pré-monter le système de serrage à l'extrémité de ce tube. Il peut être utile de compléter ce système pour permettre également un pré-montage par rapport à l'autre tube. On peut pour cela utiliser les pattes longues proposées par EP 2 598 785 mais, en particulier pour des colliers de grands diamètres, il existe un besoin pour une autre solution, sensiblement exempte des inconvénients précités.

De manière générale, il existe un besoin pour un système de serrage permettant une retenue maîtrisée à l'état pré-monté par rapport à la surface de serrage de l'un des tubes qu'il est destiné à serrer.

Ce but est atteint grâce à un système de serrage pour le raccordement d'un premier et un deuxième tube dont les extrémités en regard présentent des surfaces de serrage en saillie par rapport à la surface extérieure cylindrique desdits tubes, le système comprenant un collier qui comprend une ceinture apte à être serrée autour desdites surfaces de serrage, la ceinture présentant un premier et un deuxième flanc entre lesquels est délimité un renfoncement interne apte à recevoir les surfaces de serrage, le collier portant une série de doigts rabattables répartis angulairement, chaque doigt de la série présentant une extrémité libre de manœuvre en saillie axiale au-delà d'un premier bord de la ceinture sur une distance suffisante pour permettre sa manipulation manuelle, les doigts étant aptes, à partir d'une position initiale dans laquelle ils délimitent un diamètre minimal de repos, à être rabattus plastiquement manuellement vers l'axe de la ceinture pour délimiter un diamètre minimal de rabat inférieur audit diamètre minimal de repos.

Au sens du présent exposé, la notion de « diamètre minimal » se réfère aux dimensions diamétrales les plus petites du passage annulaire défini par les doigts. Par exemple, si les doigts présentent des formes particulières, notamment des ondulations, le diamètre minimal est celui du cercle défini par les zones des différents doigts les plus proches de l'axe de la ceinture.

Le système de serrage ainsi défini selon le présent exposé, peut initialement être disposé autour de l'extrémité du premier tube par engagement de la surface de serrage de ce premier tube dans ce système, alors que les doigts sont dans leur position initiale, leur diamètre minimal de repos étant alors au moins égal au diamètre maximum de la surface de serrage du premier tube.

Une fois l'extrémité du premier tube ainsi engagée dans le système de serrage, l'opérateur peut déformer manuellement les doigts pour les rabattre vers l'axe de la ceinture, en particulier en les rapprochant de la surface cylindrique du premier tube, de manière à ce que le diamètre minimal de rabat qu'ils définissent à l'issue de cette déformation plastique soit inférieur au diamètre maximal de la surface de serrage du premier tube. Les doigts ainsi rabattus retiennent alors le premier tube à l'intérieur du système de serrage vis-à-vis des désengagements dans un sens opposé au sens de l'engagement. Les doigts peuvent être rabattus pour venir au plus près de la surface externe du premier tube, et parfaitement caler son extrémité en position dans le système de serrage, ce qui évite que ce système ne soit pré-monté en biais ou de manière inadéquate à l'extrémité du premier tube.

Optionnellement, chaque doigt présente au moins une première ondulation, dont la convexité est tournée vers l'axe de la ceinture et dont la position du sommet délimite lesdits diamètres minimaux.

Optionnellement, chaque doigt présente en outre au moins une deuxième ondulation, qui est située entre la première ondulation et l'extrémité interne du doigt opposée à son extrémité libre, et dont la concavité est tournée vers l'axe de la ceinture.

Optionnellement, au moins l'un des doigts de la série présente une nervure longitudinale ; optionnellement tous les doigts de la série présentent une nervure longitudinale.

Optionnellement, la longueur de dépassement des doigts au-delà du premier bord de la ceinture est au moins de 5mm.

Optionnellement, la largeur des doigts, au moins dans leurs zones dépassant au-delà du premier bord de la ceinture, est au moins de 5mm.

Les doigts rabattables peuvent être reliés directement à la ceinture du collier, par exemple en venant d'une seule pièce avec elle, ou bien en lui étant fixés par tout moyen approprié, par exemple par soudure. Cependant, il peut être intéressant de faire en sorte que ces doigts soient portés par une pièce additionnelle elle-même portée par la ceinture. Ainsi, optionnellement, le système de serrage comprend une rondelle portée par le collier, les doigts étant solidaires de la rondelle, et étant optionnellement en une pièce avec la rondelle.

Optionnellement, un espace annulaire est ménagé entre le deuxième flanc et la rondelle, et les doigts s'étendent à partir de la rondelle, vers le premier flanc et au-delà de ce premier flanc.

Par exemple, la rondelle présente des pattes de fixation coopérant avec le collier pour retenir la rondelle par rapport à la ceinture en ménageant cet espace annulaire entre le deuxième flanc et la rondelle. Il s'agit par exemple de pattes de fixation coopérant avec la ceinture et, en particulier, avec son deuxième flanc. Dans ce cas, les doigts d'une part et les pattes de fixation d'autre part, peuvent s'étendre de part et d'autre de la rondelle. Selon un autre exemple, dans le cas où le collier comprend une vis de serrage, les pattes de fixation peuvent comprendre une patte conformée en boucle de retenue qui fait radialement saillie à partir de la rondelle et dans laquelle est engagée la vis, ainsi que, éventuellement une ou plusieurs autres pattes reliant la rondelle à la ceinture en étant par exemple accrochées ou pincées sur une portion de la ceinture.

Optionnellement, la rondelle présente des pattes de pré-montage déformables élastiquement aptes, à l'état non serré de la ceinture, à retenir le collier par rapport au deuxième tube lorsque la surface d'appui dudit deuxième tube est engagée dans le renfoncement interne. Ces pattes peuvent être configurées pour coopérer avec la surface externe du deuxième tube ou, au contraire, avec sa surface interne.

Un autre objet du présent exposé est un ensemble comprenant un système de serrage tel que défini ci-dessus ainsi qu'un premier et un deuxième tube dont les extrémités en regard présentent les surfaces de serrage en saillie par rapport à leur surface extérieure cylindrique, ensemble dans lequel le diamètre minimal de repos est au moins égal au diamètre maximal de la surface de serrage du premier tube, tandis que ledit diamètre minimal de rabat est inférieur à ce diamètre maximal, de sorte que les doigts rabattus retiennent le collier par rapport à la surface de serrage du premier tube lorsque ladite surface de serrage est engagée dans le renfoncement interne.

Un autre objet du présent exposé est un procédé de montage d'un ensemble comprenant un système de serrage tel que défini ci-dessus ainsi qu'un premier et un deuxième tube dont les extrémités en regard présentent les surfaces de serrage en saillie par rapport à leur surface extérieure cylindrique, procédé dans lequel on engage l'extrémité libre du premier tube dans le renfoncement interne à partir du premier bord de la ceinture alors que les doigts sont dans leur position initiale, jusqu'à ce que la surface de serrage du premier tube parvienne dans le renfoncement interne, puis on rabat les doigts derrière la surface de serrage du premier tube, afin de retenir le système de serrage contre un désengagement du premier tube en sens opposé au sens d'engagement.

Optionnellement, dans le cas où le système comprend une rondelle qui est portée par le collier et présente des pattes de pré-montage telles que définies ci-dessus, on engage d'abord l'extrémité libre du deuxième tube dans le renfoncement interne à partir du deuxième bord de la ceinture jusqu'à ce que ladite extrémité libre parvienne dans l'espace annulaire ménagé entre le deuxième flanc et la rondelle, jusqu'à ce que le système de serrage soit retenu par rapport au deuxième tube par les pattes de pré-montage. Ensuite, comme indiqué ci-dessus, on engage l'extrémité libre du premier tube dans le renfoncement interne, puis on rabat les doigts pour également réaliser le pré-montage du premier tube.

Les extrémités libres des doigts forment en quelque sorte des spatules qui offrent une surface suffisante pour que ces doigts puissent manipulés à la main pour être déformés. Cependant, les doigts peuvent présenter des zones intermédiaires dans lesquelles leur rigidité est localement accrue (c'est-à-dire que leur module élastique est localement plus élevé) pour que leur déformation plastique de rabat ne modifie que peu la géométrie de la zone concernée. Ceci peut par exemple être réalisé en prévoyant une ou plusieurs ondulations sur les doigts et/ou une ou plusieurs nervures longitudinales. Généralement, le fait de modifier certaines zones par écrouissage augmente leur module élastique. Dès lors que ces zones sont limitées en nombre et en dimensions, on obtient un bon compromis entre le fait de pouvoir aisément déformer plastiquement les doigts de manière manuelle, et d'assurer qu'ils conservent leurs formes résultant de leur déformation plastique tout en formant des surfaces de retenue efficaces pour la surface de serrage du premier tube.

Le présent exposé sera bien compris et ses avantages apparaîtront mieux à la lecture de la description détaillée qui suit, d'un mode de réalisation représenté à titre d'exemple non limitatif.

La description se rapporte aux des figures annexées sur lesquelles :
- les figures 1A et 1B sont des vues en demie coupe axiale du système de serrage selon l'invention, disposé autour des extrémités d'un premier et d'un deuxième tube ;
- la figure 2 est une vue en perspective éclatée montrant le système de serrage comprenant un collier de serrage et une rondelle de serrage séparés l'un de l'autre et montrant également les extrémités des premier et deuxième tubes ;

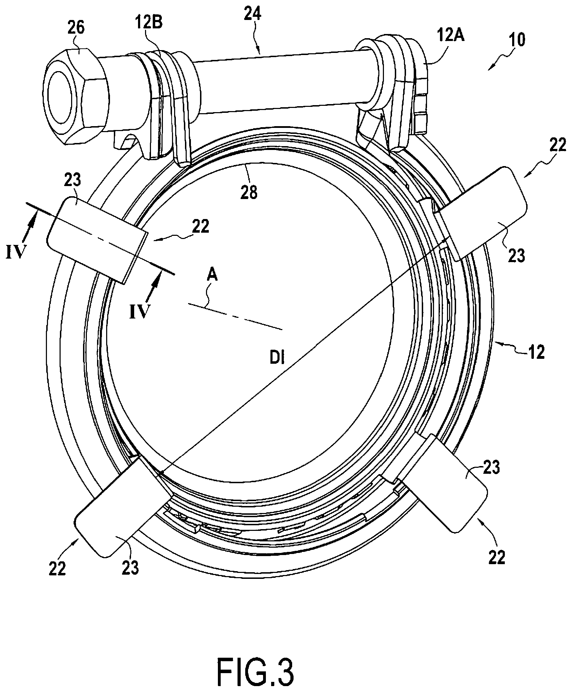

- la figure 3 est une vue en perspective selon la flèche III de la figure 1A montrant le système de serrage seul ;
- la figure 4 est une vue analogue à la figure 1A, montrant le système de serrage en position pré-montée sur les tubes ;
- la figure 5 est une vue en perspective selon la flèche V de la figure 4, montrant le système de serrage seul ;
- la figure 6 est une vue analogue aux figures 1A et 4 montrant partiellement le système de serrage serré sur les extrémités des deux tubes ; et
- la figure 7 est une vue en bout selon la flèche VII de la figure 6 montrant le système de serrage seul.

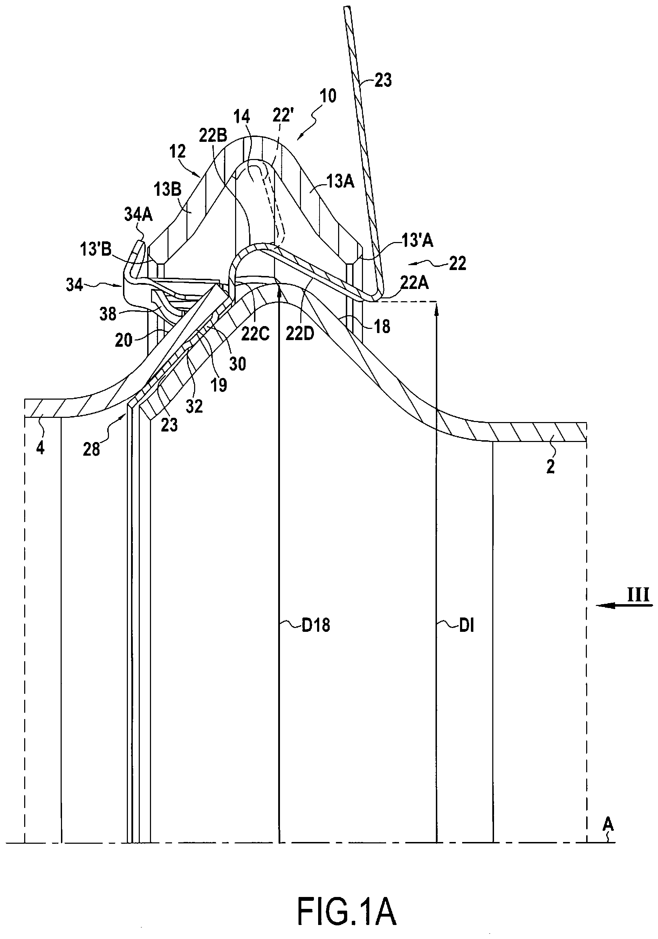

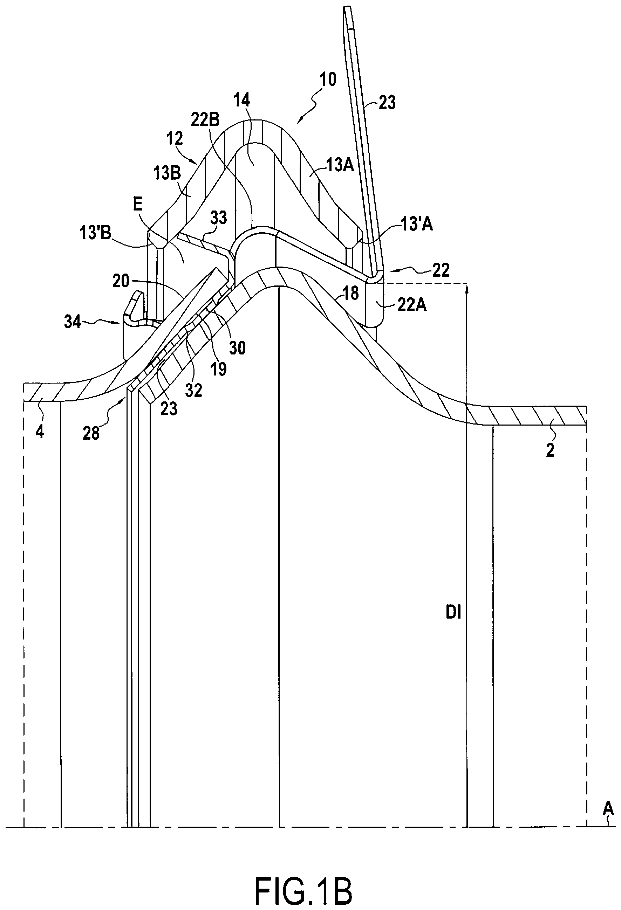

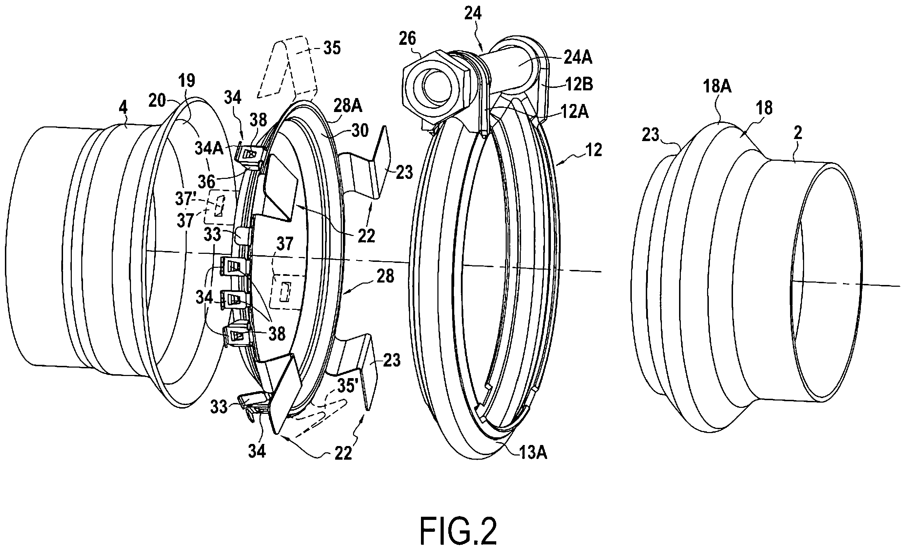

On décrit tout d'abord les figures 1A, 1B et 2. On voit sur ces figures que le système de serrage comprend un collier 10, du même type que celui que décrit EP 2 598 785 et une rondelle 28, qui coopèrent pour assembler deux tubes 2, 4.

Dans toute la suite, on qualifiera de « internes » les éléments qui sont dirigés vers l'axe A des deux tubes en mis en bout à bout et qui sont les plus proches de cet axe A par rapport à d'autres éléments qualifiés de « externes », les éléments « externes » étant également ceux qui sont dirigés à l'opposé de l'axe A. On considère par ailleurs que l'axe A des deux tubes est également l'axe de la ceinture du collier, celle-ci étant enroulée sur elle-même.

Le collier comprend une ceinture 12 qui délimite un renfoncement 14 dans lequel les surfaces d'appui, respectivement 18 appartenant au premier tube 2 et 20 appartenant au deuxième tube 4 peuvent être insérés. Ce renfoncement et ces surfaces d'appui ont des formes telles que le serrage de la ceinture du collier contraint les extrémités des tubes 2 et 4 à se rapprocher l'une de l'autre. Le renfoncement 14 est délimité entre un premier et un deuxième flanc 13A et 13B de la ceinture 12, ces flancs définissant en l'espèce les branches d'un V vus en section axiale. Ainsi, la ceinture 12 présente une section axiale avantageusement en forme en V, tandis que les surfaces d'appui 18 et 20 présentent un diamètre qui augmente progressivement vers les extrémités libres en regard des tubes et sont par exemple de forme tronconique.

La ceinture 12 présente des extrémités respectivement 12A et 12B, qui sont redressées sensiblement radialement de manière à former des pattes d'appui. Ces pattes sont percées de manière à permettre le passage de la tige 24A d'une vis de serrage 24 à travers ces pattes. La tête 24B de la vis est calée par rapport à l'une des pattes d'appui, en l'espèce la patte 12B, tandis qu'un écrou 26 est retenu par rapport à l'autre patte d'appui 12A. On comprend que la rotation de l'écrou dans le sens du vissage rapproche les pattes d'appui l'une de l'autre et réduit donc le diamètre intérieur du collier, c'est-à-dire qu'elle permet de serrer la bande. Bien entendu, d'autres façons de serrer la bande sont envisageables, par exemple des systèmes à accrochage, comme décrit notamment dans la demande de brevet FR 3 008 160.

Le collier porte une série de doigts rabattables 22 qui, comme on le voit mieux sur la figure 2, sont répartis angulairement. Les figures 1A, 1B et 2 montrent ces doigts dans leur position initiale dans laquelle ils délimitent un diamètre minimal de repos DI. On voit que ce diamètre DI est supérieur au diamètre maximal D18 (dont la moitié est indiquée sur la figure 1A) de la surface d'appui 18 du premier tube 2. En d'autres termes, le diamètre minimal de repos DI défini par les doigts rabattables 22 est supérieur au diamètre D18 maximal de la surface d'appui du premier tube 2. Par convention, le diamètre minimal défini par les doigts rabattables est la plus petite dimension diamétrale qu'ils définissent dans leurs zones autres que celles que le rattachement à la rondelle 28 que l'on décrira ensuite. C'est la plus petite dimension diamétrale du passage que ces doigts définissent pour un élément à surface cylindrique (le premier tube) s'engageant entre ces doigts.

Les doigts rabattables 22 pourraient être directement solidarisés à la ceinture 12, par exemple en lui étant fixés par les tronçons de liaison 22' indiqués en traits interrompus sur la figure 1A, et pourraient par exemple être soudés au fond du renfoncement 14 ou sur une autre partie de la ceinture, interne ou externe.

Cependant, dans l'exemple représenté, les doigts sont solidaires d'une rondelle 28. En effet, le système de serrage comprend en l'espèce une rondelle 28 qui est solidarisée avec le collier et présente les doigts rabattables 22. Cette rondelle 28 présente une portion tronconique 30 qui, comme on le voit sur les figures 1A et 1B, peut s'insérer entre les extrémités en regard des deux tubes 2 et 4 lorsqu'ils sont engagés dans le système de serrage. En effet, la rondelle 28 est retenue par rapport à la ceinture, en l'espèce par rapport à son deuxième flanc 13B, par des pattes de fixation (décrites dans la suite) de telle sorte qu'un espace annulaire E (voir figure 1B) est ménagé entre le deuxième flanc et la rondelle. L'extrémité libre du deuxième tube 4 portant sa surface d'appui 20 s'insère dans cet espace annulaire E à l'intérieur du renfoncement 14, tandis que l'extrémité libre du premier tube 2 portant sa surface d'appui 18 s'insère du côté opposé de l'espace annulaire E par rapport à la rondelle, c'est-à-dire contre la face interne de la portion tronconique 30 de la rondelle 28.

En l'espèce, l'extrémité du tube 4 est un évasé femelle, sa périphérie interne formant un évasé 19. En revanche, l'extrémité libre du premier tube 2 est une extrémité mâle qui, au-delà de la surface d'appui 18, présente une périphérie extérieure 23 dont le diamètre va en diminuant vers la terminaison de l'extrémité libre. La partie d'extrémité ainsi formée peut donc s'insérer, sensiblement avec complémentarité de forme, à l'intérieur de l'évasé 19 formé à l'extrémité du tube 4. La portion tronconique 30 de la rondelle 28 présente en l'espèce des déformations annulaires 32 formant joint d'étanchéité entre la surface interne de l'évasé 19 et la périphérie externe 23.

La fixation de la rondelle 28 du collier 10 et/ou le pré-montage du système de serrage comprenant le collier et la rondelle sur le tube 4 peuvent être assurés de la même manière que dans EP 2 598 785 et EP 1 451 498, par des pattes de fixation et/ou des pattes de pré-montage dont est équipée la rondelle. Ainsi, dans l'exemple représenté, la rondelle 28 présente une série de pattes internes 33 mieux visibles sur la figure 1B. Lorsque la rondelle est assemblée au collier, ces pattes coopèrent avec la périphérie interne du flanc 13B de la ceinture et maintiennent la portion 30 de la rondelle à distance de ce flanc en ménageant l'espace E précité. Les pattes de fixation comprennent également des pattes externes 34 visibles en particulier sur les figures 1A et 1B, qui plus longues pour dépasser le bord interne libre 13'B du flanc 13B. En l'espèce, les extrémités libres de ces pattes externes 34 sont recourbées pour former un crochet 34A qui vient s'approcher sur la face externe du flanc 13B.

En l'espèce, ces pattes externes 34 permettent également le pré-montage du système de serrage sur le tube 4. On voit en effet que des languettes 38 sont découpées dans ces pattes externes de manière à avoir leurs extrémités libres dirigées du côté de la zone de rattachement des pattes externes à la rondelle, en étant orientées radialement vers l'intérieur de manière à pouvoir s'approcher sur la surface d'appui 20 du tube 4. On pourrait bien entendu prévoir que de telles languettes 38 ou analogues soient réalisées sur d'autres pattes que des pattes externes recourbées en crochets.

Sur la figure 2, on voit encore que les pattes externes présentent sur leurs bords longitudinaux, des ailes 36 repliées vers l'intérieur. Les pattes de fixation 33 et 34 sont de petites dimensions qui se déforment élastiquement pour réaliser l'accrochage de la rondelle à l'intérieur de la ceinture et l'accrochage du système de serrage comprenant le collier et la rondelle sur la surface de serrage 20 du tube 4. Ainsi, le système de serrage peut être pré-monté à l'extrémité du tube 4. Les pattes 33 et 34 se déforment lors du serrage pour se plaquer contre la périphérie interne du flanc 13A de la ceinture 12 du collier et ainsi ne pas s'opposer au serrage.

On peut utiliser d'autres modes de fixation de la rondelle au collier. Par exemple, comme indiqué en traits interrompus sur la figure 2, la rondelle peut présenter une boucle de retenue 35, dans laquelle peut être engagé le fût de la vis 24, ainsi qu'une ou plusieurs pattes de retenue 35' pouvant être retenues sur le bord de la ceinture, par exemple par accrochage ou par pincement. De même, on peut utiliser d'autres modes de pré-montage du système de serrage par rapport au tube 4, par exemple, comme indiqué en traits interrompus sur la figure 2, en équipant la rondelle de pattes internes 37, venant s'engager dans le tube 4 et dotées de languettes de crampon 37' en saillie externe capables de se cramponner contre la surface interne du tube 4.

Pour le montage de l'ensemble comprenant les deux tubes et le système de serrage, on engage d'abord l'extrémité libre du tube 4 dans l'espace annulaire E de manière à pré-monter le système de serrage autour de cette extrémité annulaire, puis on engage l'extrémité libre du tube 2 dans le système de serrage, jusqu'à parvenir à la position représentée sur les figures 1A et 1B.

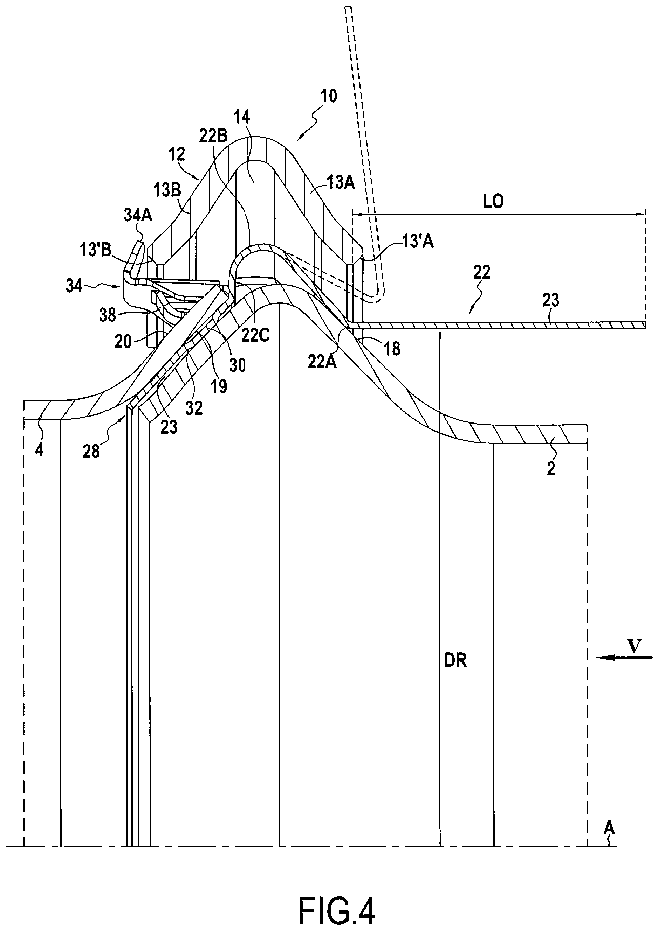

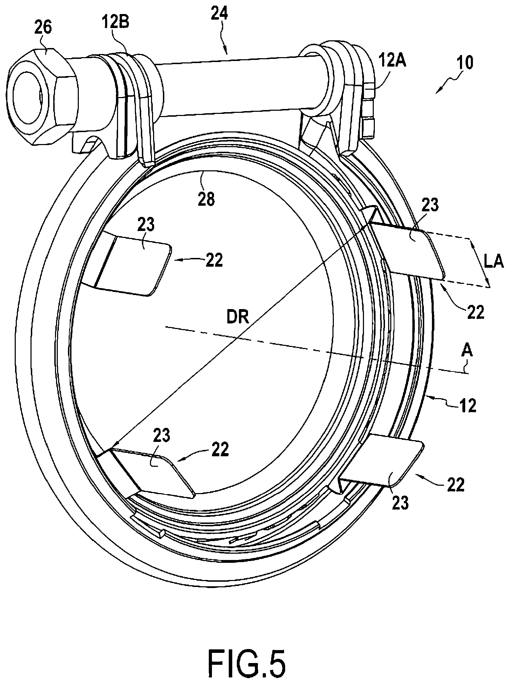

Les doigts rabattables 22 étant alors dans leur position initiale, cet engagement est possible sans efforts particuliers. Cependant, dans cette situation, le système de serrage n'est pas maintenu pré-monté à l'extrémité du tube 2 qui peut être dégagée à une simple traction. Pour réaliser ce pré-montage, les doigts rabattables 22 doivent être rabattus vers l'axe, comme représenté sur les figures 4 et 5. Dans cette situation, ces doigts définissent entre eux un diamètre minimal de rabat DR inférieur au diamètre minimal de repos, et inférieur au diamètre maximal D18 défini par la surface de serrage 18 du tube 2. En conséquence, dans cette situation, l'extrémité libre du tube 2 est également retenue à l'intérieur du système de serrage. Ce dernier est donc pré-monté sur les deux tubes.

Les doigts 22 présentent des extrémités libres de manœuvre 23 qui dépassent largement au-delà du bord 13'A de la ceinture (qui est en l'espèce le bord libre du flanc 13A) du côté duquel vient s'engager le tube 2. En particulier, la longueur de dépassement LO des doigts au-delà de ce bord est en général d'au moins 2 mm voire d'au moins 8mm. Cette longueur est en général comprise entre 5 et 20 mm, de préférence entre 8 et 15mm. La longueur de dépassement est ainsi suffisante pour que les doigts puissent être manœuvrés manuellement par leurs extrémités libres. De plus, la largeur LA des doigts, au moins dans leurs zones qui dépassent au-delà du premier bord 13'A, peut être d'au moins 5 mm, par exemple entre 5mm et 10mm. En quelque sorte, ces extrémités libres dépassant font office de spatules qui offrent des surfaces de contact suffisantes aux doigts de l'opérateur pour qu'il puisse les actionner.

On voit par ailleurs sur les figures que chaque doigt 22 présente une première ondulation 22A dont la convexité est tournée vers l'axe A de la ceinture. Les diamètres minimaux de repos DI et de rabat DR précédemment évoqués sont mesurés comme étant les dimensions diamétrales un cercle délimité par les sommets des ondulations 22A des différents doigts 22 dans la région du bord 13'A. On voit également que chaque doigt 22 présente en outre une deuxième ondulation 22B qui est située entre la première ondulation 22A et l'extrémité interne 22C du doigt opposée à son extrémité libre 23. Cette extrémité interne 22C constitue la base du doigt par laquelle il est rattaché à la portion tronconique 30 de la rondelle 28. Les ondulations 22A et 22 B sont de sens opposé, la concavité de l'ondulation 22B étant tournée vers l'axe A.

Ces ondulations sont constatées dans une section axiale des doigts 22. Ainsi, vu en coupe axiale au repos, un doigt 22 présente sensiblement la forme de la lettre N, dont les inflexions sont arrondies, et dont la terminaison peut être allongée à la manière d'une queue pour former l'extrémité libre de manœuvre 23.

Dans la région de ces ondulations, le doigt est écroui de sorte que la courbure de ces ondulations n'est que peu modifiée lors de la déformation plastique du doigt. Cette déformation se fait essentiellement par une bascule dans la région de la base 22C du doigt. On relève d'ailleurs que le doigt peut présenter au moins une nervure longitudinale, sur toute ou partie de sa longueur. En l'espèce, les doigts représentés présentent une nervure longitudinale 22D située dans la zone de liaison entre les ondulations 22A et 22B précitées.

Il convient d'ici de relever que des déformations plastiques des doigts peuvent être inversées par l'opérateur, qui peut les relever s'il a pré-monté par erreur le tube 2, ce qui peut lui permettre d'extraire ce tube du système de serrage sans efforts importants.

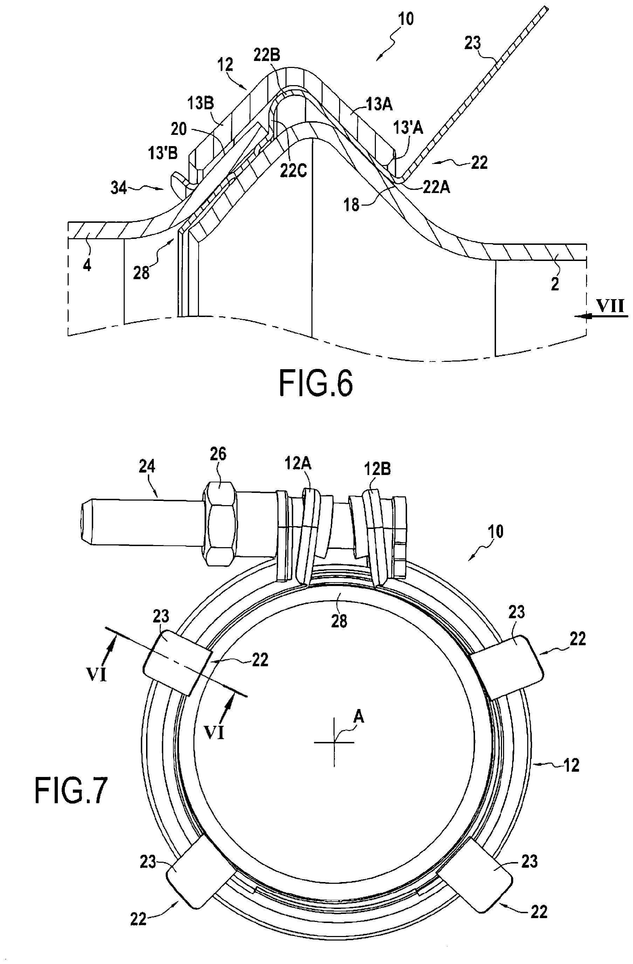

En dehors des zones éventuelles d'écrouissage évoquées précédemment, les doigts 22 présentent une certaine flexibilité et un module d'élasticité moins élevé que les pattes 33 et 34 précédemment décrites. Par conséquent, elles se déforment aisément lors du serrage du collier, quitte à ce que leurs extrémités libres de manœuvre 23 se redressent légèrement, comme le montrent les figures 6 et 7, sans nuire à l'effort de serrage.

Les doigts 22 sont répartis angulairement, de préférence de manière sensiblement régulière, on peut par exemple prévoir deux, trois ou quatre doigts.

La ceinture de serrage et la rondelle sont de préférence réalisées en métal. S'agissant en particulier de la rondelle, celle-ci peut être réalisée dans un feuillard d'acier inoxydable de type austénitique, et étant en particulier une épaisseur comprise entre 0,1 mm et 0,5 mm, voire entre 0,2 et 0,4 mm.

## Revendications

1. Système de serrage pour le raccordement d'un premier et un deuxième tube (2, 4) dont les extrémités en regard présentent des surfaces de serrage (18, 20) en saillie par rapport à la surface extérieure cylindrique desdits tubes, le système comprenant un collier (10) qui comprend une ceinture (12) apte à être serrée autour desdites surfaces de serrage, la ceinture (12) présentant un premier et un deuxième flanc (13A, 13B) entre lesquels est délimité un renfoncement interne (14) apte à recevoir les surfaces de serrage (18, 20), le collier portant une série de doigts rabattables (22) répartis angulairement, **caractérisé en ce que** chaque doigt de la série présente une extrémité libre de manoeuvre (23) en saillie axiale au-delà d'un premier bord (13'A) de la ceinture sur une distance suffisante pour permettre sa manipulation manuelle, les doigts étant aptes, à partir d'une position initiale dans laquelle ils délimitent un diamètre minimal de repos (DI), à être rabattus plastiquement manuellement vers l'axe (A) de la ceinture pour délimiter un diamètre minimal de rabat (DR) inférieur audit diamètre minimal de repos.

2. Système de serrage selon la revendication 1, dans lequel chaque doigt (22) présente au moins une première ondulation (22A), dont la convexité est tournée vers l'axe (A) de la ceinture (12) et dont la position du sommet délimite lesdits diamètres minimaux.

3. Système de serrage selon la revendication 2, dans lequel chaque doigt (22) présente en outre au moins une deuxième ondulation (22B), qui est située entre la première ondulation (22A) et l'extrémité interne (22C) du doigt opposée à son extrémité libre, et dont la concavité est tournée vers l'axe de la ceinture.

4. Système de serrage selon l'une quelconque des revendications 1 à 3, dans lequel au moins l'un des doigts (22) de la série présente une nervure longitudinale (22D), optionnellement tous les doigts de la série présentent une nervure longitudinale.

5. Système de serrage selon l'une quelconque des revendications 1 à 4, dans lequel la longueur (LO) de dépassement des doigts (22) au-delà du premier bord (13'A) de la ceinture (12) est au moins de 5mm.

6. Système de serrage selon l'une quelconque des revendications 1 à 5, dans lequel la largeur (LA) des doigts (22), au moins dans leurs zones dépassant au-delà du premier bord (13'A) de la ceinture (12), est au moins de 5mm.

7. Système de serrage selon l'une quelconque des revendications 1 à 6, comprenant une rondelle (28) portée par le collier (10), la rondelle présentant optionnellement des pattes de fixation (33, 34 ; 35, 35') qui coopèrent avec le collier, les doigts (22) étant solidaires de la rondelle (28), et étant optionnellement en une pièce avec la rondelle.

8. Système de serrage selon la revendication 7, dans lequel un espace annulaire (E) est ménagé entre le deuxième flanc (13B) et la rondelle (28), et les doigts (22) s'étendent à partir de la rondelle (28) vers le premier flanc (13A) et au-delà de ce premier flanc.

9. Système de serrage selon la revendication 8, dans lequel la rondelle présente des pattes de pré-montage (38 ; 37) déformables élastiquement aptes, à l'état non serré de la ceinture (12), à retenir le collier (10) par rapport au deuxième tube (4) lorsque la surface d'appui (20) dudit deuxième tube est engagée dans le renfoncement interne (14).

10. Ensemble comprenant un système de serrage selon l'une quelconque des revendications 1 à 9 ainsi qu'un premier et un deuxième tube (2, 4) dont les extrémités en regard présentent les surfaces de serrage (18, 20) en saillie par rapport à leur surface extérieure cylindrique, ensemble dans lequel le diamètre minimal de repos (DI) est au moins égal au diamètre maximal (D18) de la surface de serrage (18) du premier tube (2), tandis que ledit diamètre minimal de rabat (DR) est inférieur à ce diamètre maximal, de sorte que les doigts (22) rabattus retiennent le collier par rapport à la surface de serrage du premier tube lorsque ladite surface de serrage est engagée dans le renfoncement interne.

11. Procédé de montage d'un ensemble comprenant un système de serrage selon l'une quelconque des revendications 1 à 9 ainsi qu'un premier et un deuxième tube (2, 4) dont les extrémités en regard présentent les surfaces de serrage (18, 20) en saillie par rapport à leur surface extérieure cylindrique, procédé dans lequel on engage l'extrémité libre du premier tube (2) dans le renfoncement interne (14) à partir du premier bord (13'A) de la ceinture (12) alors que les doigts (22) sont dans leur position initiale, jusqu'à ce que la surface de serrage (18) du premier tube (2) parvienne dans le renfoncement interne (14), puis on rabat les doigts (22) derrière la surface de serrage du premier tube, afin de retenir le système de serrage contre un désengagement du premier tube en sens opposé au sens d'engagement.

12. Procédé de montage selon la revendication 11, dans lequel le système de serrage est selon la revendication 9, et dans lequel on engage d'abord l'extrémité libre du deuxième tube (4) dans le renfoncement interne (14) à partir du deuxième bord (13'B) de la ceinture (12) jusqu'à ce que ladite extrémité libre parvienne dans l'espace annulaire (E) ménagé entre le deuxième flanc (13'B) et la ceinture (12).

## Patentansprüche

1. Klemmsystem zum Verbinden eines ersten und eines zweiten Rohrs (2, 4), deren gegenüberliegende Enden Klemmflächen (18, 20) aufweisen, die gegenüber der zylindrischen Außenfläche der Rohre vorstehen, wobei das System eine Schelle (10) umfasst, welche einen Ring (12) aufweist, der geeignet ist, um die Klemmflächen festgezogen zu werden, wobei der Ring (12) eine erste und eine zweite Flanke (13A, 13B) aufweist, zwischen denen eine innere Vertiefung (14) begrenzt ist, welche geeignet ist, die Klemmflächen (18, 20) aufzunehmen, wobei die Schelle eine Reihe von winkelmäßig verteilten umklappbaren Fingern (22) trägt, **dadurch gekennzeichnet, dass** jeder Finger der Reihe ein freies Betätigungsende (23) aufweist, das über einen ersten Rand (13'A) des Rings über einen ausreichenden Abstand, um dessen manuelle Betätigung zu ermöglichen, axial vorsteht, wobei die Finger geeignet sind, ausgehend von einer Ausgangsposition, in der sie einen minimalen Ruhedurchmesser (DI) begrenzen, in Richtung der Achse (A) des Rings mit der Hand plastisch umgeklappt zu werden, um einen minimalen Umklappdurchmesser (DR) zu begrenzen, der kleiner als der minimale Ruhedurchmesser ist.

2. Klemmsystem nach Anspruch 1, bei dem jeder Finger (22) wenigstens eine erste Welligkeit (22A) aufweist, deren Konvexität in Richtung der Achse (A) des Rings (12) weist und deren Position des Scheitels die minimalen Durchmesser begrenzt.

3. Klemmsystem nach Anspruch 2, bei dem jeder Finger (22) ferner wenigstens eine zweite Welligkeit (22B) aufweist, die sich zwischen der ersten Welligkeit (22A) und dem inneren Ende (22C) des Fingers, das seinem freien Ende gegenüberliegt, befindet und deren Konkavität in Richtung der Achse des Rings weist.

4. Klemmsystem nach einem der Ansprüche 1 bis 3, bei dem wenigstens einer der Finger (22) der Reihe eine Längsrippe (22D) aufweist, optional alle Finger der Reihe eine Längsrippe aufweisen.

5. Klemmsystem nach einem der Ansprüche 1 bis 4, bei dem die Länge (LO) des Vorsprungs der Finger (22) über den ersten Rand (13'A) des Rings (12) hinaus wenigstens 5 mm beträgt.

6. Klemmsystem nach einem der Ansprüche 1 bis 5, bei dem die Breite (LA) der Finger (22), wenigstens in ihren Bereichen, die über den ersten Rand (13'A) des Rings (12) vorstehen, wenigstens 5 mm beträgt.

7. Klemmsystem nach einem der Ansprüche 1 bis 6, umfassend eine von der Schelle (10) getragene Unterlegscheibe (28), wobei die Unterlegscheibe optional Befestigungslaschen (33, 34; 35, 35') aufweist, die mit der Schelle zusammenwirken, wobei die Finger (22) mit der Unterlegscheibe (28) fest verbunden sind und optional mit der Unterlegscheibe einstückig ausgebildet sind.

8. Klemmsystem nach Anspruch 7, bei dem zwischen der zweiten Flanke (13B) und der Unterlegscheibe (28) ein ringförmiger Raum (E) ausgebildet ist und sich die Finger (22) von der Unterlegscheibe (28) aus in Richtung der ersten Flanke (13A) sowie über diese erste Flanke hinaus erstrecken.

9. Klemmsystem nach Anspruch 8, bei dem die Unterlegscheibe elastisch verformbare Vormontagelaschen (38; 37) aufweist, die geeignet sind, im nicht festgeklemmten Zustand des Rings (12) die Schelle (10) gegenüber dem zweiten Rohr (4) festzuhalten, wenn die Auflagefläche (20) des zweiten Rohrs in die innere Vertiefung (14) eingreift.

10. Anordnung umfassend ein Klemmsystem nach einem der Ansprüche 1 bis 9 sowie ein erstes und ein zweites Rohr (2, 4), deren gegenüberliegende Enden die Klemmflächen (18, 20) aufweisen, die gegenüber ihrer zylindrischen Außenfläche vorstehen, Anordnung, bei der der minimale Ruhedurchmesser (DI) wenigstens gleich dem maximalen Durchmesser (D18) der Klemmfläche (18) des ersten Rohrs (2) ist, während der minimale Umklappdurchmesser (DR) kleiner als dieser maximale Durchmesser ist, so dass die umgeklappten Finger (22) die Schelle in Bezug auf die Klemmfläche des ersten Rohrs festhalten, wenn die Klemmfläche in die innere Vertiefung eingreift.

11. Verfahren zur Montage einer Anordnung, die ein Klemmsystem nach einem der Ansprüche 1 bis 9 sowie ein erstes und ein zweites Rohr (2, 4) umfasst, deren gegenüberliegende Enden die Klemmflächen (18, 20) aufweisen, die gegenüber ihrer zylindrischen Außenfläche vorstehen, Verfahren, bei dem das freie Ende des ersten Rohrs (2) von dem ersten Rand (13'A) des Rings (12) in die innere Vertiefung (14) eingesteckt wird, während sich die Finger (22) in ihrer Ausgangsposition befinden, bis die Klemmfläche (18) des ersten Rohrs (2) in die innere Vertiefung (14) gelangt, anschließend die Finger (22) hinter die Klemmfläche des ersten Rohrs umgeklappt werden, um das Klemmsystem gegen ein Lösen des ersten Rohrs in der zu der Eingriffsrichtung entgegengesetzten Richtung festzuhalten.

12. Montageverfahren nach Anspruch 11, bei dem das Klemmsystem gemäß Anspruch 9 ist und bei dem zunächst das freie Ende des zweiten Rohrs (4) von dem zweiten Rand (13'B) des Rings (12) aus in die innere Vertiefung (14) eingesteckt wird, bis das freie Ende in den zwischen der zweiten Flanke (13B) und dem Ring (12) ausgebildeten ringförmigen Raum (E) gelangt.

## Claims

1. A clamping system for connecting together a first tube and a second tube (2,4) having facing ends presenting clamping surfaces (18, 20) projecting relative to the cylindrical outside surfaces of said tubes, the system comprising a collar (10) that comprises a belt (12) suitable for being clamped around said clamping surfaces, the belt (12) presenting first and second flanks (13A, 13B) between which there is defined an inner setback (14) suitable for receiving the clamping surfaces (18, 20), the collar carrying an angularly distributed series of foldable fingers (22), **characterized in that** each finger of the series presents a free operating end (23) projecting axially beyond a first edge (13'A) of the belt over a distance that is sufficient to enable it to be manipulated by hand, the fingers being suitable, starting from an initial position in which they define a rest minimum diameter (DI), for being folded manually and plastically towards the axis (A) of the belt in order to define a folded-in minimum diameter (DR) that is less than said rest minimum diameter.

2. A clamping system according to claim 1, wherein each finger (22) presents one or more a first undulation (22A) with its convex side facing towards the axis (A) of the belt (12) and with the respective positions of its vertex defining said minimum diameters.

3. A clamping system according to claim 2, wherein each finger (22) also presents one or more second undulation (22B) that is situated between the first undulation (22A) and the inner end (22C) of the finger remote from its free end, and having its concave side facing towards the axis of the belt.

4. A clamping system according to any one of claims 1 to 3, wherein one or more of the fingers (22) of the series presents a longitudinal spline (22D), and optionally all of the fingers of the series present respective longitudinal splines.

5. A clamping system according to any one of claims 1 to 4, wherein the length (LO) by which the fingers (22) project beyond the first edge (13'A) of the belt (12) is 5 mm or more.

6. A clamping system according to any one of claims 1 to 5, wherein the width (LA) of the fingers (22), at least in their zones projecting beyond the first edge (13'A) of the belt (12), is 5 mm or more.

7. A clamping system according to any one of claims 1 to 6, including a washer (28) carried by the collar (10), the washer optionally presenting fastener tabs (33, 34; 35, 35') that co-operate with the collar, the fingers (22) projecting from the washer (28) and optionally being integral with the washer.

8. A clamping system according to claim 7, wherein an annular gap (E) is left between the second flank (13B) and the washer (28), and the fingers (22) extend from the washer (28) towards the first flank (13A) and beyond the first flank.

9. A clamping system according to claim 8, wherein the washer presents elastically deformable pre-mounting tabs (38; 37) that are suitable, in the non-clamped state of the belt (12), for retaining the collar (10) relative to the second tube (4) when the bearing surface (20) of said second tube is engaged in the inner setback (14).

10. An assembly comprising a clamping system according to any one of claims 1 to 9 together with a first tube and a second tube (2,4) having facing ends presenting the clamping surfaces (18, 20) projecting relative to their cylindrical outside surfaces, in which assembly the rest minimum diameter (DI) is not less than the maximum diameter (D18) of the clamping surface (18) of the first tube (2), while said folded-in minimum diameter (DR) is less than said maximum diameter, such that the folded-in fingers (22) retain the collar relative to the clamping surface of the first tube when said clamping surface is engaged in the inner setback.

11. A mounting method for mounting an assembly comprising a clamping system according to any one of claims 1 to 10 together with a first tube (2) and a second tube (4) having facing ends presenting the clamping surfaces (18, 20) projecting relative to their cylindrical outside surfaces, in which method the free end of the first tube (2) is engaged in the inner setback (14) from the first edge (13'A) of the belt (12) while the fingers (22) are in their initial position, until the clamping surface (18) of the first tube (2) penetrates into the inner setback (14), and then the fingers (22) are turned down behind the clamping surface of the first tube in order to retain the clamping system against the first tube disengaging in the direction opposite to the engagement direction.

12. A mounting method according to claim 11, wherein the clamping system is according to claim 9, and wherein the free end of the second tube (4) is engaged initially in the inner setback (14) from the second edge (13'B) of the belt (12) until said free end penetrates into the annular gap (E) left between the second flank (13'B) and the belt (12) .
